# EUROPEAN PATENT SPECIFICATION

(11) **EP 1 759 911 B1**
(45) Date of publication and mention of the grant of the patent: **27.09.2017**
(21) Application number: 06016114.8
(22) Date of filing: 02.08.2006
(51) Int. Cl.: B60K 28/14, B62J 27/00, B62K 5/01, B62K 5/027, G01C 9/12, B60W 10/00

(54) **Inclination angle sensor layout structure for vehicles**
Neigungswinkelmessanordnung für Fahrzeuge
Structure du capteur d'angle d'inclinaison pour véhicules

(30) Priority: 02.09.2005 JP 2005255029
(43) Date of publication of application: 07.03.2007
(73) Proprietor: Honda Motor Co., Ltd., Minato-ku Tokyo 107-8556 (JP)
(72) Inventor: Hasegawa, Toru, Minato-ku Tokyo, 107-8556 (JP); Hanafusa, Seiji, Minato-ku Tokyo, 107-8556 (JP)
(74) Representative: Rupp, Christian

(56) References cited:
- US-A1- 2002 027 037
- US-A1- 2004 050 609
- US-A1- 2005 161 274

## Description

The present invention relates to an inclination angle sensor layout structure for a vehicle.

An inclination angle sensor is for detecting, for example, the inclination angle in the left-right direction of a vehicle, and, when the vehicle is largely inclined so that the inclination angle exceeds a predetermined angle, the engine is forcibly stopped, for example, by stopping the ignition in the engine or the fuel supply to the engine.

As a layout structure for such an inclination angle sensor in a vehicle according to the prior art, there has been known a layout structure in which a turnover sensor is provided in the vicinity of a steering shaft and on the front side of a fuel tank (refer to, for example, Patent Document 1: Japanese Patent laid-open No. 2005-178420).

Patent Document US 2005/0161274 A1 shows the same features as Patent Document 1.

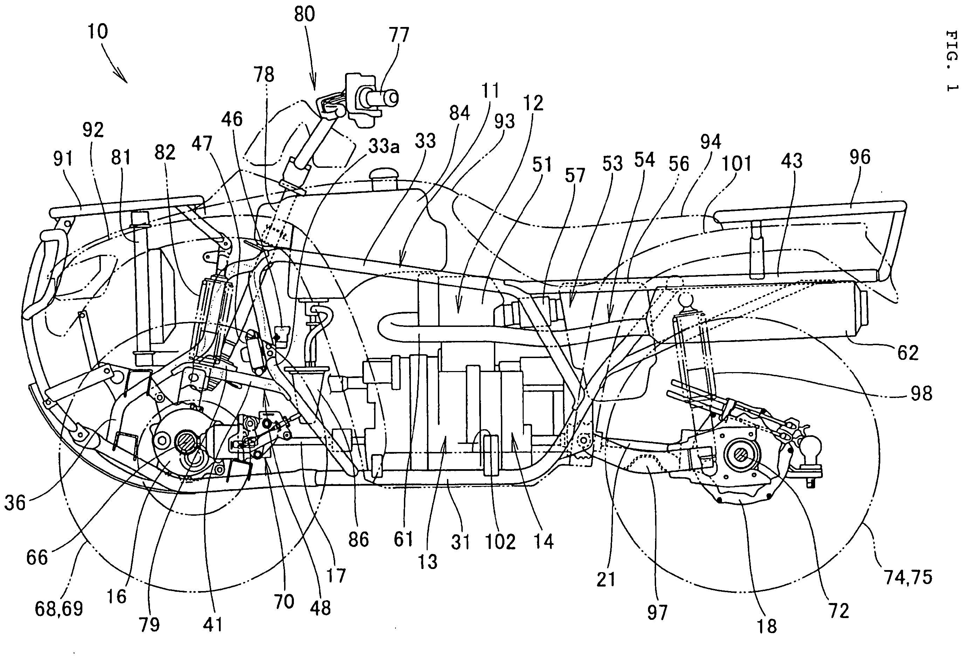

In Figs. 1, 3 and 7 of Patent Reference 1, it is shown that a fuel tank 3 is provided at its front portion with a recessed portion for passing a steering shaft 9 therethrough, and turnover sensors 46 and 47 are disposed in the recessed portion.

In addition, as shown in Figs. 4 and 7 of Patent Document 1, it is described that a bar 22 is bridgingly provided between left and right main frames 20, 20, two sub frames 23, 23 are extended from the bar 22 toward the vehicle rear side, a stay 24 is bridgingly provided between the sub frames 23, 23, and the turnover sensors 46 and 47 are attached to the stay 24.

Where the two turnover sensors 46 and 47 are disposed in the recessed portion provided at the front portion of the fuel tank 3, it is necessary, for obviating interference with the turnover sensors 46 and 47, to form the recessed portion in a large size or spacing the recessed portion largely from the turnover sensors 46 and 47, which influences the shape and layout of the fuel tank 3.

On the other hand, a center of turning of the vehicle is present in the vicinity of the steering shaft 9. Therefore, where the turnover sensors 46 and 47 are disposed at such a center of turning, it is possible to reduce the possibility of the sensors being influenced by the centrifugal force at the time of turning of the vehicle; accordingly, it is desired to lay out the turnover sensors 46 and 47 in the vicinity of the center of turning of the vehicle, without influencing the shapes and layout of such component parts as the fuel tank 3.

Furthermore, it is desirable to adopt a layout structure in which the stay 24 for supporting the turnover sensors 46 and 47 is attached to a higher rigidity portion of a vehicle body frame so as to obviate an influence of vibrations of the vehicle body and in which the turnover sensors 46 and 47 can be protected against flying stones and the like coming from the vehicle body front side.

It is an object of the present invention to provide an inclination angle sensor layout structure such that the inclination angle sensor is less liable to be influenced by a centrifugal force at the time of turning of the vehicle or by vibrations of the vehicle body, it is unnecessary to change the shapes and layout of component parts provided on the vehicle body, and the inclination angle sensor can be protected against flying stone and the like coming from the vehicle body front side.

The invention as set forth in claim 1 resides in an inclination angle sensor layout structure for a vehicle having at least three wheels, the vehicle comprising an engine, a fuel injection system for supplying a fuel from a fuel tank into said engine, with a steering mechanism including a steering handle and a steering shaft being provided at a front portion of a vehicle body, and with an inclination angle sensor for detecting the inclination angle in the left-right direction of the vehicle body being attached to a vehicle body frame, wherein a plurality of frame members constituting the vehicle body frame supporting the steering mechanism are connected in the shape of a loop in side view, and the inclination angle sensor is disposed on the loop.

At the time of turning of the vehicle comprising at least three wheels, the vehicle body is turned to the left or the right, about a vertical axis passing through a position which is at the center in the vehicle width direction and which corresponds to the front wheel(s) in the vehicle front-rear direction. Since the steering shaft constituting the steering mechanism is located at the position of such a center of turning, layout of the inclination angle sensor in the vicinity of the steering mechanism ensures that the displacement of the inclination angle sensor at the time of turning of the vehicle will be smaller and that a centrifugal force acting on the inclination angle sensor will be smaller.

With the inclination angle sensor laid out on the loop composed of the plurality of frame members constituting the vehicle body frame supporting the steering mechanism, the degree of freedom in selecting the position of the inclination angle sensor on the loop without changing the shapes or layout of component parts provided on the vehicle body is increased.

With the plurality of frame members so laid out as to form a loop in side view, the rigidity of the vehicle frame is more enhanced. Where the inclination angle sensor is laid out at a rear portion of any one of the plurality of frame members forming the loop, a flying stone or the like coming from the vehicle front side is blocked by the frame member and is prevented from colliding on the inclination angle sensor.

The invention as set forth in claim 2 is uniquely defined that the fuel injection system comprises a relay for controlling the fuel supply to the engine on the basis of a signal from the inclination angle sensor, and the inclination angle sensor is attached to the vehicle body frame together with the relay.

Since the inclination angle sensor and the relay are disposed close to each other, a wiring for connection between the inclination angle sensor and the relay is shortened.

In the invention as set forth in claim 1, the plurality of frame members constituting the vehicle body frame supporting the steering mechanism are connected in the shape of a loop in side view, and the inclination angle sensor is laid out on the loop. Therefore, the inclination angle sensor can be laid out in the vicinity of the center of turning of the vehicle, and there is no need for changing the shapes or layout of component parts provided on the vehicle body. In addition, the inclination angle sensor can be disposed at a high rigidity portion of the vehicle body frame, and the influence of vibrations of the vehicle body on the inclination angle sensor can be reduced. Furthermore, the inclination angle sensor can be protected by the loop form portion of the vehicle body frame.

In the invention as set forth in claim 2, the fuel injection system comprises the relay for controlling the fuel supply to the engine on the basis of the signal from the inclination angle sensor, and the inclination angle sensor is attached to the vehicle body frame together with the relay. Therefore, the inclination angle sensor and the relay are disposed close to each other, so that the wiring for connection between the inclination angle sensor and the relay can be made shorter, and noise can be reduced accordingly.
Fig. 1 is a side view of a vehicle in which an inclination angle sensor layout structure according to the present invention is adopted.
Fig. 2 is a plan view of the vehicle pertaining to the present invention.
Fig. 3 is a perspective view showing an inclination angle sensor and a relay pertaining to the present invention.
Fig. 4 is a side view showing the inclination angle sensor and the relay pertaining to the present invention.
Fig. 5 is a back elevation showing the inclination angle sensor and the relay pertaining to the present invention.
Fig. 6 shows illustrations of the inclination angle sensor pertaining to the present invention.
Fig. 7 is an illustration of the layout and operation of the inclination angle sensor pertaining to the present invention.

Now, a best mode for carrying out the present invention will be described below, based on the accompanying drawings. Incidentally, the drawings are to be looked at according to the posture of symbols.

Fig. 1 is a side view of a vehicle for which an inclination angle sensor layout structure according to the present invention is adopted. The vehicle 10 is a four-wheel-drive type all terrain vehicle (ATV) in which a power unit 14 composed of a longitudinally set type engine 12 and a transmission 13 is disposed substantially at the center of a vehicle body frame 11, a front final assembly 16 disposed on the front side of the power unit 14 and the transmission 13 are connected to each other through a front propeller shaft 17, and a rear final assembly 18 disposed on the rear side of the power unit 14 and the transmission 13 are connected to each other through a rear propeller shaft 21.

The vehicle body frame 11 comprises a left-right pair of lower frames 31, 32 (only symbol 31 on the viewer's side is shown) supporting a lower portion of the power unit 14; a roughly angular U-shaped left-right pair of upper frames 33, 34 (only symbol 33 on the viewer's side is shown) attached to upper portions of the lower frames 31, 32 so as to surround the power unit 14 in side view; a left-right pair of front frames 36, 37 (only symbol 36 on the viewer's side is shown) for connection between front upper portions of the upper frames 33, 34 and front end portions of the lower frames 31, 32; a left-right pair of front connection frames 41, 42 (only symbol 41 is shown) for connection between the front frames 36, 37 and the upper frames 33, 34; and a left-right pair of rear upper frames 43, 44 (only symbol 43 on the viewer's side is shown) extended rearwards from rear upper portions of the upper frames 33, 34 and connected at their intermediate portions to the rear ends of the lower frames 31, 32.

The upper frame 33 on one side is a member such that an inclination angle sensor 46 for detecting the inclination angle in the left-right direction of the vehicle body and a relay 47 provided for a fuel injection system (described later) are attached to an upper portion of a front frame portion 33a constituting a front portion thereof.

The inclination angle sensor 46 is attached to a loop 48 formed in a substantially triangular shape in side view by connecting together the upper frame 33, the front frame 36 and the front connection frame 41 which constitute the vehicle body frame 11.

The engine 12 has a cylinder portion 51, to which an intake system 53 and an exhaust system 54 are connected. The intake system 53 includes an air cleaner 56 and a throttle body 57, while the exhaust system 54 is composed of an exhaust pipe 61 and a muffler 62.

The front final assembly 16 is a device connected to the side of left and right front wheels 68, 69 through a left-right pair of drive shafts 66, 67 (only symbol 66 on the viewer's side is shown), and provided at its rear portion with a drive switching unit 70 for making and breaking the transmission of a drive force from the front propeller shaft 17 to the front final assembly 16. Specifically, the drive switching unit 70 is a unit for switching the vehicle 10 to a rear-wheel-drive mode or a four-wheel-drive mode by putting the front wheels 68, 69 into a drive mode or a non-drive mode.

The rear final assembly 18 is a device connected to the side of left and right rear wheels 74, 75 through a left-right pair of drive shafts 72, 73 (only symbol 72 on the viewer's side is shown).

A steering bar handle 77 for steering the front wheels 68, 69 is supported by a steering shaft 78. The steering shaft 78 is rotatably mounted at its upper portion on a cross pipe (not shown) bridgingly provided between upper portions of the left and right upper frames 33, 34, and is rotatably mounted at its lower portion on a cross plate 79 bridgingly provided between the left and right front connection frames 41, 42.

The steering bar handle 77 and the steering shaft 78 are component parts constituting a steering mechanism 80.

Symbol 81 in the figure denotes a radiator; 82, 83 (only symbol 82 on the viewer's side is shown) denote a left-right pair of front cushion units; 84 denotes a fuel tank; 86 denotes a fuel pump; 91 denotes a front carrier; 92 denotes a front fender; 93 denotes a body cover; 94 denotes a seat; 96 denotes a rear carrier; 97 denotes a swing arm for swingaly supporting the rear final assembly 16; 98 denotes a rear cushion unit bridginly provided between the side of the rear upper frames 43, 44 and the side of the rear final assembly 16; 101 denotes a rear fender; and 102 denotes a step floor.

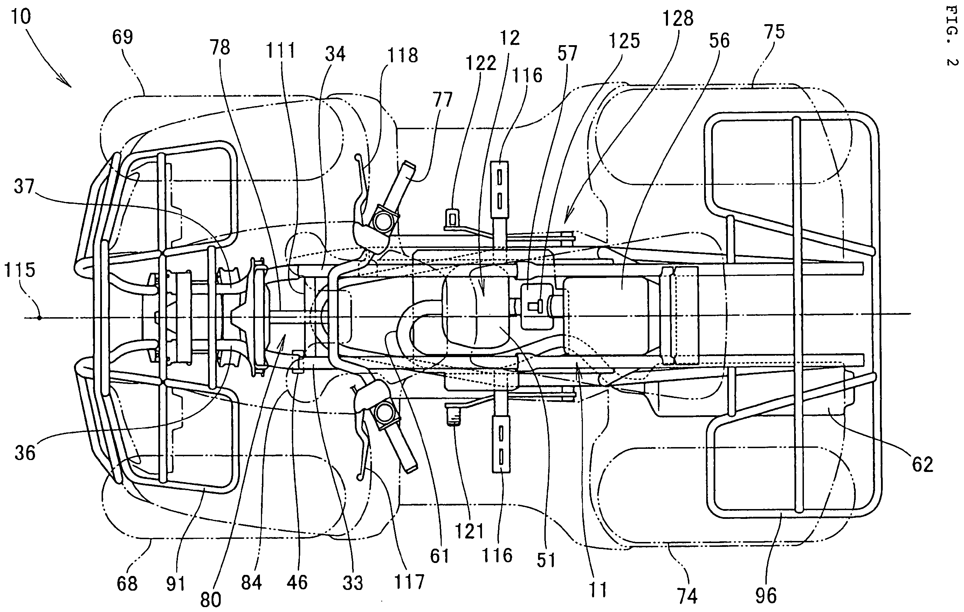

Fig. 2 is a plan view of the vehicle pertaining to the present invention, in which the inclination angle sensor 46 is attached to the upper frame 33 on the left side, whereby it is disposed in the vicinity of a cross pipe 111 supporting an upper portion of the steering shaft 78. The cross pipe 111 is a member bridgingly mounted between the left and right upper frames 33, 34. Incidentally, symbol 115 denotes a vehicle body center line extended in the vehicle body front-rear direction and located at the center of the vehicle width; 116, 116 denote steps; 117 denotes a clutch lever; 118 denotes a front wheel brake lever; 121 denotes a change pedal; and 122 denotes a rear wheel brake pedal.

The throttle body 57 is a component part equipped with a fuel injection valve 125 by which a fuel supplied from the fuel pump 86 (see Fig. 1) connected to the fuel tank 84 is injected into the throttle body 57. The fuel injection valve 125 is controlled with respect to fuel injection amount and injection timing by an engine control unit which is not shown.

The fuel pump 86, a relay (not shown) which will be described later, the fuel injection valve 125 and the engine control unit are component parts constituting a fuel injection system 128.

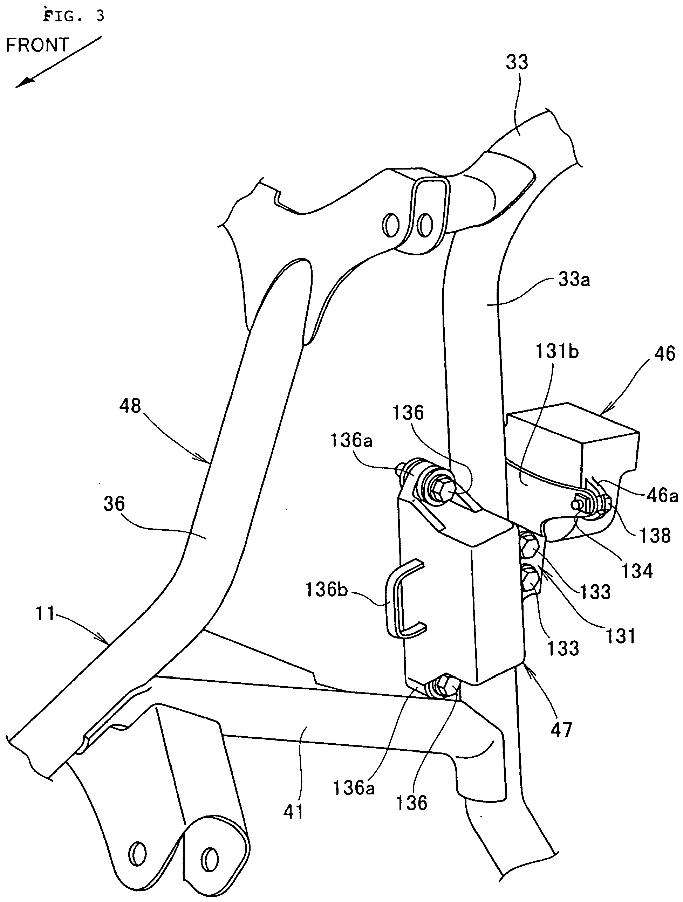

Fig. 3 is a perspective view (arrow (FRONT) in the figure indicates the vehicle front side, here and hereinafter) showing the inclination angle sensor and the relay pertaining to the present invention, showing that the inclination angle sensor 46 and the relay 47 are attached to the front frame portion 33a of the upper frame 33 through an attaching bracket 131.

With the inclination angle sensor 46 laid out on the loop 48, the inclination angle sensor 46 can be supported by the loop 48 which is enhanced in rigidity, and, since the loop 46 is restrained from vibrating, the vibration of the inclination angle sensor 46 is also suppressed.

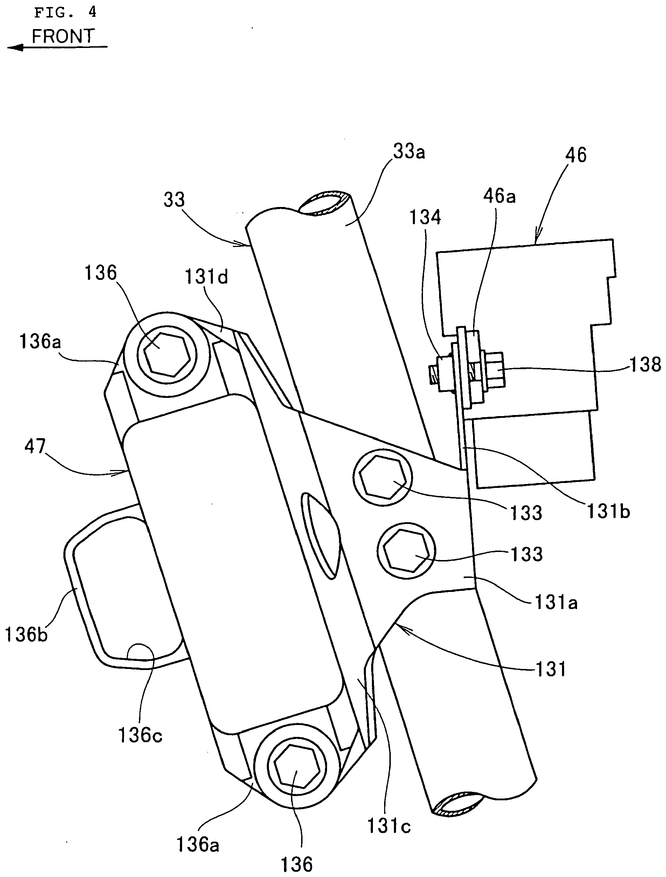

Fig. 4 is a side view showing the inclination angle sensor and the relay pertaining to the present invention.

The attaching bracket 131 is composed of a frame attaching portion 131a for attachment to the front frame portion 33a of the upper frame 33 by bolts 133, 133; a sensor attaching portion 131b to which nuts 134, 134 (only symbol 134 on the viewer's side is shown) is attached for attachment of the inclination sensor 46; an inclined portion 131c continuous with the frame attaching portion 131a; and a relay attaching portion 131d continuous with the inclined portion 131c, for attachment of the relay 47 by bolts 136, 136. The attaching bracket 131 is a member through which the inclination angle sensor 46 and the relay 47 are attached to the front frame portion 33a in the manner of being astride the front frame portion 33a.

The inclination angle sensor 46 is disposed on the rear side of the front frame portion 33a, whereby the inclination angle sensor 46 can be protected by the front frame portion 33a from flying stones and the like coming from the vehicle front side.

The relay 47 is provided with stretched portions 136a, 136a for attachment to the relay attaching portion 131d by the bolts 136, 136. Incidentally, symbol 136b denotes a support portion for supporting, by passing through its hole portion 136c, pipes, wires and the like connected to component parts in the periphery of the relay 47.

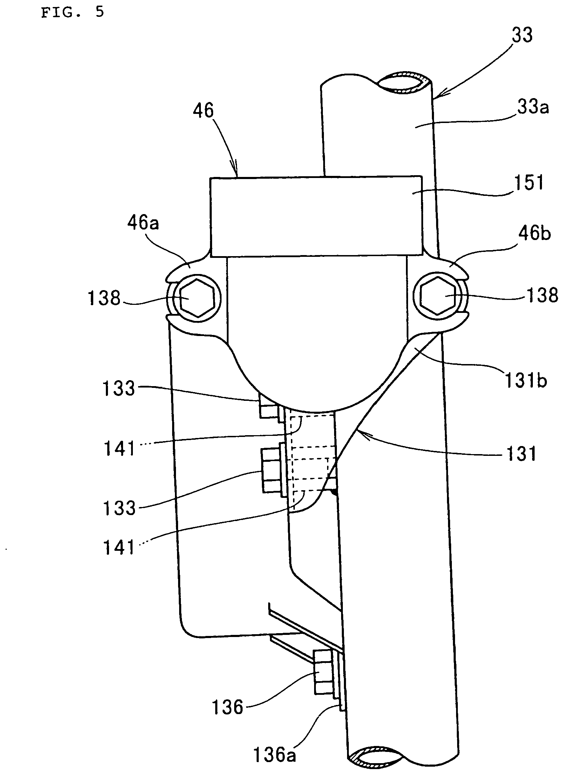

Fig. 5 is a back elevation view showing the inclination angle sensor and the relay pertaining to the present invention.

The inclination angle sensor 46 is provided on its lateral sides with side projecting portions 46a, 46b. The side projecting portions 46a, 46b are attached to the sensor attaching portion 131b of the attaching bracket 131 by the bolts 138, 138 and nuts 134, 134 (see Fig. 4).

Symbols 141, 141 in the figure denote boss portions attached to the front frame portion 33a. The boss portions 141, 141 are formed with female screws, and the attaching bracket 131 is attached to the boss portions 141, 141 by screwing the bolts 133, 133 into the female screws.

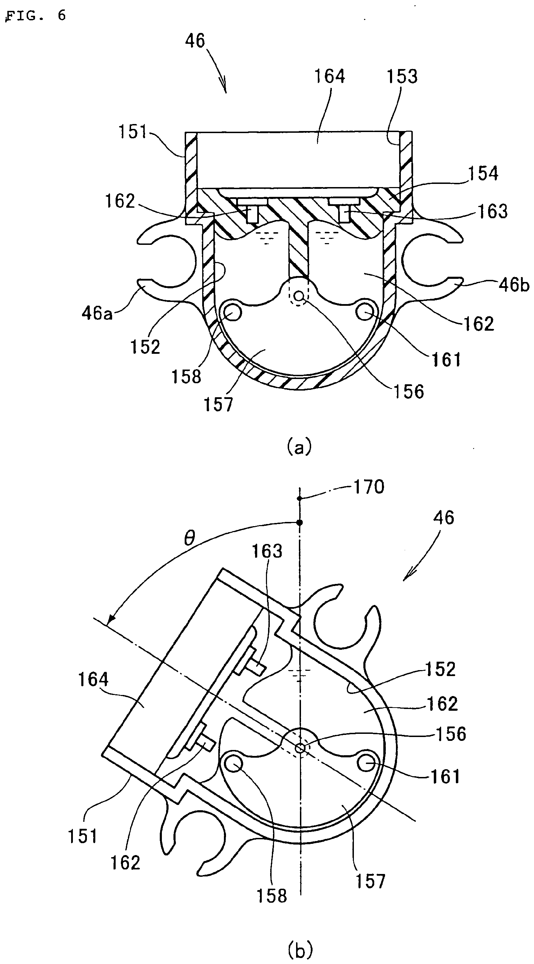

Figs. 6(a) and 6(b) are illustrations of the inclination angle sensor pertaining to the present invention.

Fig. 6(a) is a sectional view. The inclination angle sensor 46 is composed of a resin-made casing 151; a resin-made partition wall 154 for partitioning the interior of the casing 151 into a detection space 152 and a detection circuit containing portion 153; a weight 157 formed in a substantially semicircular shape from a non-magnetic material and swingably supported in the detection space 152 by a support shaft 156 attached to the partition wall 154; magnets 158, 161 attached to end portions of the weight 157; a damper oil 162 filling up the detection space 152 for damping the swing of the weight 157; magnetic sensors 162, 163 provided in the partition wall 154 so as to detect the magnetism of the magnets 158, 161 when the magnets 158, 161 come into the proximity thereof; and a detection circuit 164 connected to the magnetic sensors 162, 163 by wires and contained in the detection circuit containing portion 153.

The weight 157 is in the state of pending from the support shaft 156 by gravity unless an external force is exerted thereon, and, when the vehicle body is horizontal on the left and right sides, the distance between the magnet 158 and the magnetic sensor 162 and the distance between the magnet 161 and the magnetic sensor 163 are substantially equal.

The detection circuit 164 outputs a signal to the engine control unit when the magnitude of the signal from the magnetic sensors 162, 163 has reached a predetermined value.

Now, the operation of the inclination angle sensor 46 as above-mentioned will be described below.

Fig. 6(b) is an operation diagram showing the operation of the inclination angle sensor 46.

For example, in the case where the vehicle is inclined to the left or the right and, attendant on this, the inclination of the casing 151 of the inclination angle sensor 46 attached to the vehicle body frame has reached a predetermined angle θ against a vertical line 170, the magnetic sensor 162 provided on the casing 157 side comes into proximity to the magnet 158 on one side in the weight 157. As a result, the magnetic sensor 162 detects the magnetism of the magnet 158, and a detection signal upon the detection is sent to the detection circuit 164. In the case where the magnitude of the detection signal has reached or exceeded a predetermined value, the detection circuit 164 sends an output signal to the engine control unit. Upon receiving the output signal from the detection circuit 164 and simultaneously receiving other signals (for example, a vehicle velocity signal (a signal not more than a predetermined vehicle velocity), a throttle opening signal (a signal not more than a predetermined opening), etc.), the engine control unit stops the operations of the fuel pump and the fuel injection valve, or stops the ignition at a spark plug.

In the present invention, as shown in Figs. 1 and 3, the inclination angle sensor 46 is laid out at the front frame portion 33a of the lower frame 33 constituting the vehicle body frame 11 so that the inclination angle sensor 46 will be little influenced by centrifugal forces.

The operation of this configuration will be described below.

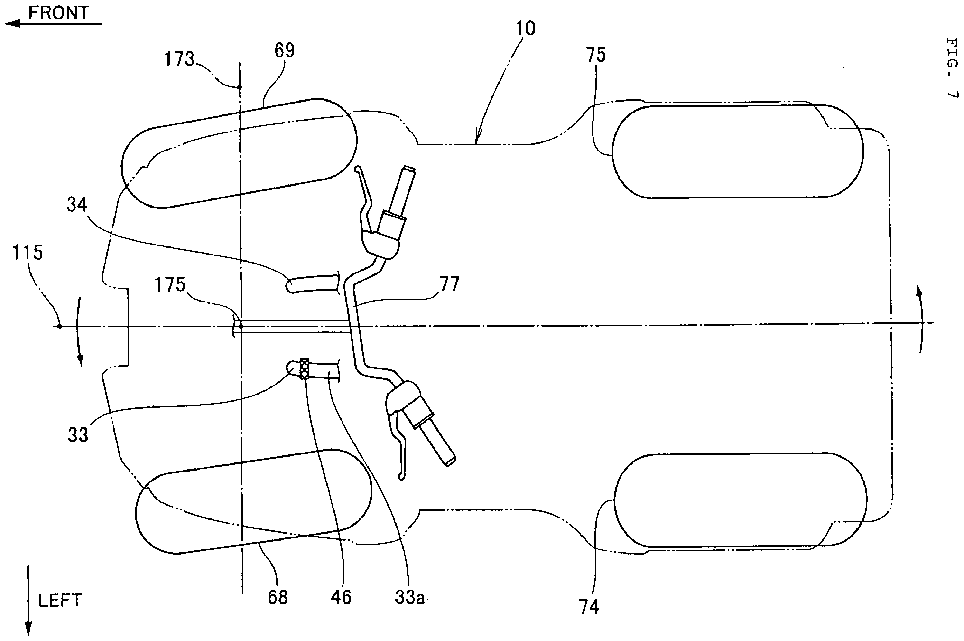

Fig. 7 is an illustration (arrow (LEFT) in the figure indicates the vehicle left side) of the layout and operation of the inclination angle sensor pertaining to the present invention.

When the steering bar handle 77 of the vehicle 10 is turned, for example, to the left, the vehicle body of the vehicle 10 is turned to the left, about a center of turning 175 (the location represented by a solid circle) which is located on the vehicle body center line 115 and on the straight line 173 passing through the left and right front wheels 68, 69.

In the present invention, the inclination angle sensor 46 is attached to the front frame portion 33a of the lower frame 33 in the vicinity of the center of turning 175 of the vehicle body, and, therefore, the centrifugal force acting on the inclination angle sensor 46 can be reduced, and the weight in the inclination angle sensor 46 can be restrained from being largely swung by a centrifugal force.

As has been described referring to Figs. 1 to 3 above, an unique character of this invention is that, in the vehicle 10 having the front wheels 68, 69 and the rear wheels 74, 75 as at least three wheels and comprising the engine 12, and the fuel injection system 128 for supplying the fuel from the fuel tank 84 to the engine 12, with the steering mechanism 80 including the steering bar handle 77 and the steering shaft 78 being provided at a front portion of the vehicle body, and with the inclination angle sensor 46 for detecting the inclination angle in the left-right direction of the vehicle body being attached to the vehicle body frame 11, the plurality of frame members 33, 36, 41 constituting the vehicle body frame 11 supporting the steering mechanism 80 (specifically, the steering shaft 78) is connected in the shape of a loop in side view, and the inclination angle sensor 46 is disposed on the loop 48.

This ensures that the inclination angle sensor 46 can be laid out in the vicinity of the center of turning of the vehicle 10, and there is no need for changing the shape or layout of component parts provided on the vehicle body. In addition, the inclination angle sensor 46 can be disposed on a high rigidity portion of the vehicle body frame 11, and the influence of vibrations of the vehicle body on the inclination angle sensor 46 can be reduced. Furthermore, the inclination angle sensor 46 can be protected by the loop form portion of the vehicle body frame, namely, the loop 48.

Another unique character of this invention is that, the fuel injection system 128 comprises the relay 47 for controlling the fuel supply to the engine 12 on the basis of a signal from the inclination angle sensor, and the inclination angle sensor 46 is attached to the vehicle body frame 11, specifically the front frame portion 33a of the upper frame 33, together with the relay 47.

This ensures that the inclination angle sensor 46 and the relay 47 are disposed close to each other, so that the wiring for connection between the inclination angle sensor 46 and the relay 47 can be shortened, and noise can be reduced accordingly.

Incidentally, while the inclination angle sensor 46 and the relay 47 are attached to the front frame portion 33a of the upper frame 33 as shown in Fig. 3 in the present embodiment, this configuration is not limitative; for example, configurations may be adopted in which the inclination angle sensor 46 and the relay 47 are attached to the upper frame 34 (see Fig. 2), the front frame 36 in the vicinity of the cross pipe 111 (see Fig. 2), the front frame 37 (see Fig. 2), the front connection frame 41 or the front connection frame 42 (not shown).

Besides, the inclination angle sensor 46 and the relay 47 may be attached respectively to different ones of the frame members in the vicinity of the cross pipe 111.

The inclination angle sensor layout structure according to the present invention is preferable for application to three-wheel vehicles and four-wheel vehicles.

10: vehicle; 11: vehicle body frame; 12: engine; 33, 36, 41: frame member (upper frame, front frame, front connection frame); 46: inclination angle sensor; 47: relay; 48: loop; 68, 69: wheel (front wheel); 74, 75: wheel (rear wheel); 77: steering handle (steering bar handle); 78: steering shaft; 80: steering mechanism; 84: fuel tank; 128: fuel injection system.

## Claims

1. A vehicle (10) having at least three wheels and an inclination angle sensor (46) layout structure, said vehicle (10) comprising a plurality of frame members (33, 36, 41) constituting a vehicle body frame (11), an engine (12), a fuel tank (84), a fuel injection system (128) for supplying a fuel from said fuel tank (84) into said engine (12), with a steering mechanism (80) including a steering handle (77) and a steering shaft (78) being provided at a front portion of a vehicle body, and an inclination angle sensor (46) for detecting the inclination angle in the left-right direction of said vehicle body being attached to said vehicle body frame (11),
wherein the steering shaft (78) is rotatably mounted at its upper portion and lower portion on said plurality of frame members (33, 36, 41), the plurality of frame members (33, 36, 41) supports said steering mechanism (80) and is connected in the shape of a loop (48) in side view of the vehicle, and said inclination angle sensor (46) is disposed on said loop (48) and is disposed below said fuel tank (84).

2. The vehicle (10) as set forth in claim 1, wherein said fuel injection system (128) comprises a relay (47) for controlling the fuel supply to said engine (12) on the basis of a signal from said inclination angle sensor (46), and said inclination angle sensor (46) is attached to said vehicle body frame (11) together with said relay (47).

3. The vehicle (10) as set forth in claim 1 or claim 2, wherein the inclination angle sensor (46) is disposed on a rear side of a front frame portion (33a) of an upper frame (33) of the plurality of frame members (33, 36, 41) constituting said vehicle body frame (11).

## Patentansprüche

1. Fahrzeug (10), das wenigstens drei Räder und eine Neigungswinkelsensor (46)-Anordnungsstruktur hat, wobei das Fahrzeug (10) aufweist eine Vielzahl von Rahmenelementen (33, 36, 41), die einen Fahrzeugkarosserierahmen (11) bilden, einen Motor (12), einen Kraftstofftank (84), ein Kraftstoffeinspritzsystem (128) zur Zuleitung von Kraftstoff von dem Kraftstofftank (84) zu dem Motor (12), einen Lenkmechanismus (80) mit einem Lenker (77) und einer Lenkwelle (78), die an einem vorderen Bereich der Fahrzeugkarosserie vorgesehen sind, und einen an dem Fahrzeugkarosserierahmen (11) angebrachten Neigungswinkelsensor (46) zum Erfassen des Neigungswinkels in der links-rechts Richtung der Fahrzeugkarosserie,
wobei die Lenkwelle (78) rotierbar am oberen Bereich und am unteren Bereich davon an der Vielzahl der Rahmenelemente (33, 36, 41) befestigt ist, wobei die Vielzahl der Rahmenelemente (33, 36, 41) den Lenkmechanismus (80) hält und in Seitenansicht des Fahrzeugs in der Form eines Rings (48) verbunden ist, und wobei der Neigungswinkelsensor (46) an dem Ring (48) angeordnet ist und unter dem Brennstofftank (84) angeordnet ist.

2. Fahrzeug (10) nach Anspruch 1, wobei das Brennstoffeinspritzungssystem (128) ein Relais (47) zur Steuerung der Brennstoffzuleitung zu dem Motor (12) auf der Basis eines Signals von dem Neigungswinkelsensor (46) aufweist, und der Neigungswinkelsensor (46) an dem Fahrzeugkarosserierahmen (11) zusammen mit dem Relais (47) angebracht ist.

3. Fahrzeug (10) nach Anspruch 1 oder Anspruch 2, wobei der Neigungswinkelsensor (46) an einer Rückseite eines Vorderrahmenbereichs (33a) eines oberen Rahmens (33) der Vielzahl von Rahmenelementen (33, 36, 41), die den Fahrzeugkarosserierahmen (11) bilden, angeordnet ist.

## Revendications

1. Véhicule (10) ayant au moins trois roues et une structure d'implantation de capteur d'angle d'inclinaison (46), ledit véhicule (10) comprenant une pluralité d'organes de cadre (33, 36, 41) constituant un cadre de véhicule (11), un moteur (12), un réservoir de carburant (84), un système d'injection de carburant (128) pour fournir un carburant provenant dudit réservoir de carburant (84) dans ledit moteur (12), un mécanisme de direction (80) comportant une poignée de direction (77) et un arbre de direction (78) qui est prévu au niveau d'une portion avant d'un châssis de véhicule, et un capteur d'angle d'inclinaison (46) pour détecter l'angle d'inclinaison dans la direction gauche-droite dudit châssis de véhicule qui est fixé audit cadre de véhicule (11),
dans lequel l'arbre de direction (78) est monté en rotation au niveau de sa portion supérieure et de sa portion inférieure sur ladite pluralité d'organes de cadre (33, 36, 41), la pluralité d'organes de cadre (33, 36, 41) supporte ledit mécanisme de direction (80) et est raccordée en forme de boucle (48) en vue de profil du véhicule, et ledit capteur d'angle d'inclinaison (46) est disposé sur ladite boucle (48) et est disposé en dessous dudit réservoir de carburant (84).

2. Véhicule (10) selon la revendication 1, dans lequel ledit système d'injection de carburant (128) comprend un relais (47) pour commander l'alimentation en carburant audit moteur (12) sur la base d'un signal provenant dudit capteur d'angle d'inclinaison (46), et ledit capteur d'angle d'inclinaison (46) est fixé audit cadre de véhicule (11) conjointement avec ledit relais (47).

3. Véhicule (10) selon la revendication 1 ou la revendication 2, dans lequel le capteur d'angle d'inclinaison (46) est disposé sur un côté arrière d'une portion de cadre avant (33a) d'un cadre supérieur (33) de la pluralité d'organes de cadre (33, 36, 41) constituant ledit cadre de véhicule (11).
